# EUROPEAN PATENT APPLICATION

(11) **EP 4 230 049 A1**
(43) Date of publication of application: **23.08.2023**
(21) Application number: 22210254.3
(22) Date of filing: 29.11.2022
(51) Int. Cl.: A23C 9/12, A01J 1/00

(54) **A YOGURT MAKER**

(30) Priority: 31.12.2021 TR 202122190
(71) Applicant: Arçelik Anonim Sirketi, 34445 Istanbul (TR)
(72) Inventor: ERDEM, FUNDA, 34445 ISTANBUL (TR); CAVUSOGLU, GONUL, 34445 ISTANBUL (TR); KESKIN, EGE, 34445 ISTANBUL (TR); HUSAIN, SALMAN MUSTAFA, 34445 ISTANBUL (TR)

(57) **Abstract**

The present invention relates to a yogurt maker (1) comprising a body (2); at least one receptacle (3) which is disposed in the body (2) and wherein the fermentation process occurs; a lid (4) which is provided on the body (2) so as to eliminate the contact between the receptacle (3) and the outer environment; at least one heater (5) which is provided on the body (2); a cooler (6) which is provided in the body (2); a temperature sensor (7) and a conductivity sensor (8) which are provided in the body (2); and a control unit (9) which controls the heater (5) and the cooler (6) according to the data received from the temperature sensor (7) and the conductivity sensor (8).

## Description

The present invention relates to a yogurt maker wherein the fermentation process is controlled.

Today, yogurt is a foodstuff which is often consumed in almost every household. Yogurt is often produced by boiling and fermenting milk at home. Since the boiling process and fermentation temperature of the milk is important for the quality of yogurt, the process must be carried out under constant observation. This situation causes a waste of time for consumers and makes the process difficult. Therefore, automatic yogurt makers are frequently used today. Since yogurt is consumed daily, especially in families with small children, the yogurt makers become very useful. The yogurt makers provide the user with functions such as heating, cooling, keeping warm, time setting, automatic termination, etc. However, during the fermentation of yogurt, non-homogeneous temperature distributions occur as the milk solidifies. Therefore, different flavors may occur in different parts of yogurt.

In the state of the art Chinese Utility Model Document No. CN2158864, a yogurt maker is disclosed, comprising a blowing member.

In the state of the art Japanese Patent Document No. JP08110054, a method for fermentation of milk to produce yogurt is disclosed.

The aim of the present invention is the realization of a yogurt maker which provides homogeneous temperature distribution.

The yogurt maker realized in order to attain the aim of the present invention, explicated in the first claim and the respective claims thereof, comprises a body; at least one receptacle which is disposed in the body and wherein the fermentation process occurs; a lid which is provided on the body so as to eliminate the contact between the receptacle and the outer environment; at least one heater which is provided on the body; a cooler which is provided in the body; a temperature sensor and a conductivity sensor which are provided in the body; and a control unit which controls the heater and the cooler according to the data received from the temperature sensor and the conductivity sensor. The pH value of yogurt is controlled by using the conductivity values measured by the conductivity sensor.

The yogurt maker of the present invention comprises the control unit which
- operates the heater for a predetermined time,
- comparing the measured temperature value, according to the data received from the temperature sensor, with the predetermined Tfer fermentation temperature,
   ∘ continues to operate the heater if the measured temperature value is lower than Tfer,
   ∘ operates the cooler if the measured temperature value is higher than Tfer,
   ∘ operates the heater at a variable power to keep the Tfer temperature in the receptacle constant if the measured temperature value is equal to Tfer,
- measuring and recording the conductivity by means of the conductivity sensor when the measured temperature value is equal to Tfer,
- comparing the data received from the conductivity sensor with the recorded conductivity value, and starting to operate the heater at constant power when the measured conductivity value is lower than the recorded conductivity value by the Xlim ratio predetermined by the manufacturer,
- comparing the data received from the conductivity sensor with the Flim value predetermined by the manufacturer,
- turning off the heater after being operated for t1 time according to the measured conductivity value and operating the cooler for t2 time.

After the temperature value measured by the temperature sensor is equalized with the Tfer fermentation temperature, the heater is operated such that the Tfer temperature remains constant by means of the PID control. When the conductivity value measured by the conductor sensor is lower than the recorded conductivity value by the Xlim ratio predetermined by the manufacturer, the PID control is terminated and the heater is operated at constant power.

In an embodiment of the present invention, the yogurt maker comprises the control unit which enables the t1 and t2 times to be changed according to the yogurt consistency selected by the user. The t2 time for activating the cooler is revised as tx if the user prefers sweet consistency, as ty if he/she prefers medium sweet consistency, and as tz if he/she chooses sour consistency. In the preferred embodiment of the present invention, the t2 time is applied as tx<ty<tz.

By means of the present invention, homogeneous temperature distribution in the receptacle is ensured, thus providing homogeneous pH distribution.

The yogurt maker realized in order to attain the aim of the present invention is illustrated in the attached figures, where:

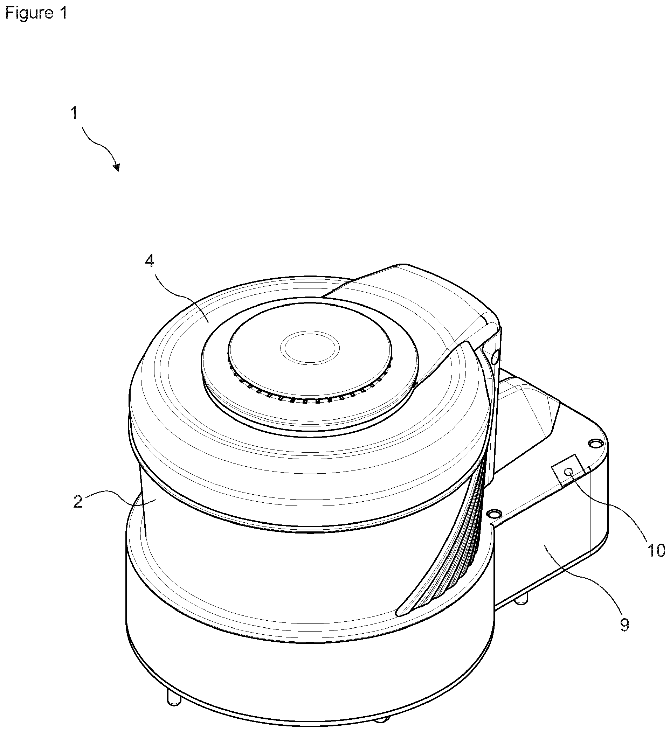

Figure 1 - is the perspective view of the yogurt maker.

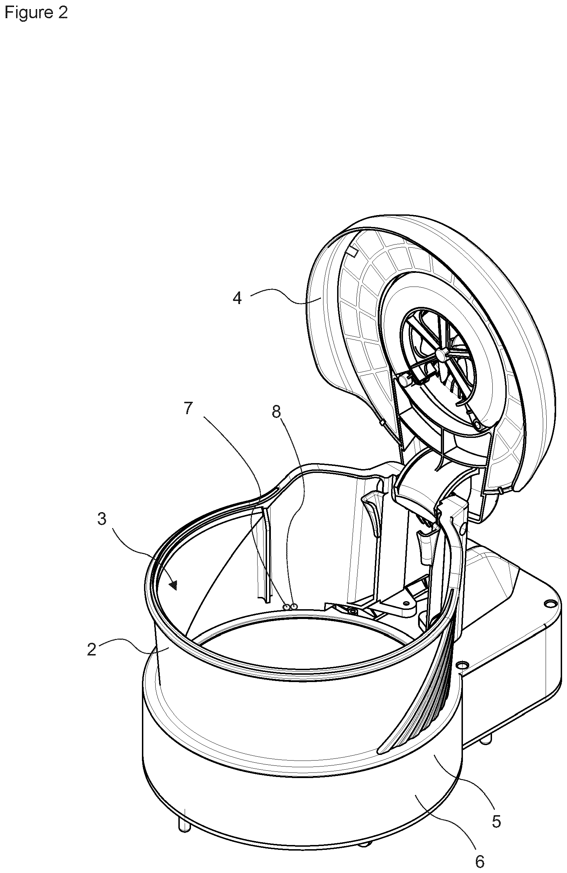

Figure 2 - is the perspective view of the yogurt maker when the lid is open.

The elements illustrated in the figures are numbered as follows:
1. Yogurt maker
2. Body
3. Receptacle
4. Lid
5. Heater
6. Cooler
7. Temperature sensor
8. Conductivity sensor
9. Control unit
10. Second temperature sensor

The yogurt maker (1) comprises a body (2); at least one receptacle (3) which is disposed in the body (2) and wherein the fermentation process occurs; a lid (4) which is provided on the body (2) so as to eliminate the contact between the receptacle (3) and the outer environment; at least one heater (5) which is provided on the body (2); a cooler (6) which is provided in the body (2); a temperature sensor (7) and a conductivity sensor (8) which are provided in the body (2); and a control unit (9) which controls the heater (5) and the cooler (6) according to the data received from the temperature sensor (7) and the conductivity sensor (8). The receptacle (3) is situated on the body (2). By means of the lid (4) provided on the body (2), the contact between the receptacle (3) and the outer environment during the process is eliminated. The heater (5) provided on the body (2) heats the ingredients put into the receptacle (3). The pH value of yogurt is controlled by using the conductivity values measured by the conductivity sensor (8).

The yogurt maker (1) of the present invention comprises the control unit (9) which
- operates the heater (5) for a predetermined time,
- comparing the measured temperature value, according to the data received from the temperature sensor (8), with the predetermined Tfer fermentation temperature,
   ∘ continues to operate the heater (5) if the measured temperature value is lower than Tfer,
   ∘ operates the cooler (6) if the measured temperature value is higher than Tfer,
   ∘ operates the heater (5) at a variable power to keep the Tfer temperature in the receptacle (3) constant if the measured temperature value is equal to Tfer,
- measuring and recording the conductivity by means of the conductivity sensor (8) when the measured temperature value is equal to Tfer,
- comparing the data received from the conductivity sensor (8) with the recorded conductivity value, and starting to operate the heater (5) at constant power when the measured conductivity value is lower than the recorded conductivity value by the Xlim ratio predetermined by the manufacturer,
- comparing the data received from the conductivity sensor (8) with the Flim value predetermined by the manufacturer,
- turning off the heater (5) after being operated for t1 time according to the measured conductivity value and operating the cooler (6) for t2 time.

At the end of the fermentation process, the temperature difference between the lower and upper surfaces of the receptacle (3) is reduced by operating the cooler (6) for the t2 time. Thus, different pH distributions in different parts of the yogurt are prevented, and it is ensured that the consistency desired by the user is obtained in all regions of the yogurt.

In an embodiment of the present invention, the yogurt maker (1) comprises the control unit (9) which enables the t1 and t2 times to be changed according to the yogurt consistency selected by the user. The t2 time for activating the cooler (6) is revised as tx if the user prefers sweet consistency, as ty if he/she prefers medium sweet consistency, and as tz if he/she chooses sour consistency. In the preferred embodiment of the present invention, the t2 time is applied as tx<ty<tz. The t (t1, t2, tx, ty, tz) to be applied by the control unit (9) is predefined by the manufacturer.

In an embodiment of the present invention, the yogurt maker (1) comprises a second temperature sensor (10) which is provided on the body (2), and the control unit (9) which enables the t2 time to be changed according to the data received from the second temperature sensor (10). The operating time of the cooler (6) varies according to the ambient temperature in which the yogurt maker (1) is operated. Therefore, the control unit (9) determines the t2 time by checking the ambient temperature.

By means of the present invention, homogeneous heating is provided by reducing the temperature difference between the upper surface and the lower surface of the yogurt during the yogurt fermentation process, thus providing the consistency desired by the user in the whole yogurt.

## Claims

1. A yogurt maker (1) **comprising** a body (2); at least one receptacle (3) which is disposed in the body (2) and wherein the fermentation process occurs; a lid (4) which is provided on the body (2) so as to eliminate the contact between the receptacle (3) and the outer environment; at least one heater (5) which is provided on the body (2); a cooler (6) which is provided in the body (2); a temperature sensor (7) and a conductivity sensor (8) which are provided in the body (2); and a control unit (9) which controls the heater (5) and the cooler (6) according to the data received from the temperature sensor (7) and the conductivity sensor (8), **characterized by** the control unit (9) which
- operates the heater (5) for a predetermined time,
- comparing the measured temperature value, according to the data received from the temperature sensor (8), with the predetermined Tfer fermentation temperature,
∘ continues to operate the heater (5) if the measured temperature value is lower than Tfer,
∘ operates the cooler (6) if the measured temperature value is higher than Tfer,
∘ operates the heater (5) at a variable power to keep the Tfer temperature in the receptacle (3) constant if the measured temperature value is equal to Tfer,
- measuring and recording the conductivity by means of the conductivity sensor (8) when the measured temperature value is equal to Tfer,
- comparing the data received from the conductivity sensor (8) with the recorded conductivity value, and starting to operate the heater (5) at constant power when the measured conductivity value is lower than the recorded conductivity value by the Xlim ratio predetermined by the manufacturer,
- comparing the data received from the conductivity sensor (8) with the Flim value predetermined by the manufacturer,
- turning off the heater (5) after being operated for t1 time according to the measured conductivity value and operating the cooler (6) for t2 time.

2. A yogurt maker (1) as in Claim 1, **characterized by** the control unit (9) which enables the t1 and t2 times to be changed according to the yogurt consistency selected by the user.

3. A yogurt maker (1) as in Claim 2, **characterized by** a second temperature sensor (10) which is provided on the body (2), and the control unit (9) which enables the t2 time to be changed according to the data received from the second temperature sensor (10).
